# EUROPÄISCHE PATENTANMELDUNG

(11) **EP 3 904 297 A1**
(43) Veröffentlichungstag der Anmeldung: **03.11.2021**
(21) Anmeldenummer: 20171490.4
(22) Anmeldetag: 27.04.2020
(51) Int. Cl.: C02F 1/461, C02F 1/463, C02F 3/12, C02F 101/10

(54) **FÄLLMODUL**

(71) Anmelder: ATB WATER GmbH, 32457 Porta Westfalica (DE)
(72) Erfinder: Zelmer, Torsten, 32457 Porta Westfalica (DE)
(74) Vertreter: Ter Meer Steinmeister & Partner

(57) **Zusammenfassung**

Die Erfindung betrifft ein Fällmodul (10) zur Reinigung von Abwasser durch Abgabe von Metallionen mittels Oxidation oder Elektrolyse, umfassend zwei Metallplatten (14, 16), die im Abstand voneinander angeordnet sind. Erfindungsgemäß werden die Metallplatten (14, 16) durch mindestens zwei weitere Seitenwände (18, 20) zu einer Reaktionskammer (12) ergänzt, die zu einer Einlassseite und einer der Einlassseite nicht gegenüberliegenden Auslassseite (22, 24) offen ist.

## Beschreibung

Die vorliegende Erfindung betrifft ein Fällmodul gemäß dem Oberbegriff des Anspruchs 1.

Solche Fällmodule werden zur Abwasserreinigung eingesetzt. Sie umfassen zwei Metallplatten, die in einem definierten Abstand voneinander in einem zu reinigenden Abwasservolumen angeordnet sind und dieses durch Abgabe von Metallionen reinigen können. Die Abgabe der Ionen wird entweder durch die natürliche Oxidation des Metalls im Wasser oder durch eine zusätzlich angewandte Elektrolyse durch eine angeschlossene Gleichstromquelle erzielt. Hierdurch bilden sich chemische Verbindungen, die ein Ausfällen des Phosphats aus dem Abwasser bewirken. Weiterhin wird durch diesen Prozess eine zusätzliche Ausfällung bzw. Koagulation von weiteren in Schwebe befindlichen Abwasserinhaltsstoffen erzielt.

Solche Fällmodule sind Stand der Technik und beispielsweise aus US 6 663 766 B1 und EP 1 017 633 A1 bekannt.

Die vorliegende Erfindung betrifft insbesondere Fällmodule, die in eine Klärvorrichtung eingebaut werden können. Bei derartigen Klärvorrichtungen handelt es sich beispielsweise um Kleinkläranlagen, die einen Klärbehälter umfassen, der durch zumindest eine Trennwand in Klärkammern unterteilt ist. Die Trennwand ist dabei mit mindestens einer Durchtrittsöffnung oder einem Überlauf versehen, so dass das Abwasser von einer Klärkammer in eine andere strömen kann, welche somit aufeinander folgende Klärstufen bilden können.

Für die Wirksamkeit des Klärvorgangs ist wesentlich, dass alle Komponenten der Kläranlage derart angeordnet sind, dass sie sich in ihrer Wirksamkeit nicht behindern, sondern nach Möglichkeit sogar gegenseitig unterstützen. Für ein Fällmodul der hier einschlägigen Art gilt, dass auch dessen Einbauposition unter diesem Gesichtspunkt günstig gewählt werden muss. Beim Stand der Technik sind solche Fällmodule häufig in einem eigens abgetrennten Bereich der Klärkammer angeordnet, wie etwa in DE 100 404 17 A1 dargestellt, so dass die Ausfällung gewissermaßen eine eigene Klärstufe bildet. Das Fällmodul ist hier in einem durch fest verbaute seitliche Trennwände weitgehend separierten Raum innerhalb der Klärkammer angeordnet. Dies erfordert einen auf das Fällmodul zugeschnittenen Aufbau der Klärvorrichtungen und macht eine Nachrüstung bestehender Anlagen ohne hohen Aufwand und Kosten unmöglich.

Dieser Nachteil wurde von der Anmelderin durch eine Anordnung des Fällmoduls beseitigt, die in EP 3 480 169 A1 dargestellt ist. Diese sieht als Alternative eine Anordnung des Fällmoduls frei in einer der Klärkammern oder vor oder hinter einer Durchtrittsöffnung in einer Trennwand vor. Dabei wird das Fällmodul von einer freien Strömung durch die Klärkammern durchströmt. Auch kann die Fällung durch Anordnung des Moduls über einem Belüfter verstärkt werden. Die Nachrüstbarkeit ist hier erheblich verbessert, und es kann eine Anordnung des Fällmoduls gewählt werden, in der die bereits bestehenden Komponenten der Klärvorrichtung die Durchströmung des Fällmoduls unterstützen.

Die Effizienz eines solchen frei positionierten Fällmoduls wird jedoch dadurch begrenzt, dass die Verweilzeit des einströmenden Abwassers im Fällmodul selbst relativ gering ist. Bisher bestand keine Möglichkeit, einen hohen Durchsatz des Fällmoduls mit einer hohen Effizienz zu vereinbaren.

Es ist daher Aufgabe der vorliegenden Erfindung, ein nachrüstbares Fällmodul der vorher genannten Art zu schaffen, bei dem eine möglichst effiziente Fällung bei ausreichendem Durchsatz ermöglicht wird.

Diese Aufgabe wird erfindungsgemäß durch ein Fällmodul mit den Merkmalen des Anspruchs 1 gelöst. Weitere vorteilhafte Ausgestaltungen ergeben sich aus den Unteransprüchen.

Erfindungsgemäß werden die Metallplatten des Fällmoduls durch mindestens zwei weitere Seitenwände zu einer Reaktionskammer begrenzt, die zu einer Einlassseite und einer der Einlassseite nicht gegenüberliegenden Auslassseite offen ist.

Diese Ausführung eines Fällmoduls weist bedeutende Vorteile gegenüber dem Stand der Technik auf. So ist zum einen der Aufbau sehr einfach, was die Nachrüstbarkeit erleichtert. In einem sehr einfachen Fall ist das Fällmodul eine Art seitlich offener Kasten, der z.B. mit seiner offenen Seite vor eine Durchtrittsöffnung einer Trennwand innerhalb der Kläranlage gehängt wird. Dieser Bereich der Trennwand begrenzt somit die Reaktionskammer für die Ausfällung, lässt diese jedoch seitlich an der Durchtrittsöffnung seitlich offen. Zwei weitere Seiten der Reaktionskammer werden durch die ohnehin stets vorhandenen Metallplatten gebildet. Werden zwei weitere Seiten des Fällmoduls - etwa eine der Trennwand gegenüber liegende Seite und eine Ober- oder Unterseite - durch zusätzliche Wände verschlossen, bleibt eine Kastenseite (die nicht verschlossene der Ober- und Unterseite) offen. Das Abwasser kann z.B. durch die Durchtrittsöffnung in die Reaktionskammer einströmen und an der weiteren offenen Seite des Kastens wieder ausströmen.

Die hier beschriebene Strömungsrichtung ist nicht beschränkend, sondern kann auch umgekehrt werden. Im Übrigen kann die Strömung durch beliebige Mittel erzeugt werden, die in der Klärvorrichtung vorhanden sind und - unabhängig von der Präsenz des erfindungsgemäßen Fällmoduls - beispielsweise zur Durchführung eines biologischen Klärprozesses, zur Überführung von Abwasser von einem Bereich der Klärvorrichtung in einen anderen, zur Belüftung eines Klärkammervolumens oder dergleichen dienen, mithin also konventionelle und bekannte Einrichtungen der Klärvorrichtung sind. Eine Strömung, die durch ein solches Mittel oder eine solche Einrichtung erzeugt wird, wird also dazu genutzt, ein Abwasservolumen durch das Fällmodul zu leiten. Das Fällmodul wird in diesem Fall in einem bereits vorhandenen Volumenstrom innerhalb der Klärvorrichtung angeordnet.

Das einströmende Abwasser, welches durch die offene Einlassseite in das Fällmodul eintritt, kann das Fällmodul somit nicht in einer linearen (und möglicherweise annähernd laminaren) Strömung passieren, wie es bei einem allseits offenen Modul und bei gegenüber liegenden Ein- und Auslassseiten der Fall wäre. Vielmehr wird die Strömung dadurch umgelenkt, dass die Auslassseite der Einlassseite nicht gegenüberliegt. Die Umlenkung hat zur Folge, dass die Strömung gestört wird und sich Wirbel bilden können, die dafür sorgen, dass das Abwasser länger in der Reaktionskammer verweilt. Diese Verweilzeit kann noch dadurch gesteigert werden, dass das Abwasser nicht kontinuierlich in die Reaktionskammer einströmt, sondern chargenweise, wie es ohnehin in den Klärzyklen vieler Kleinkläranlagen der Fall ist. Durch eine verlängerte Verweilzeit und eine Umlenkung werden in erhöhtem Maße Metallionen von den Metallplatten an das Abwasser abgegeben. Diese ermöglichen nicht nur eine effizientere Fällung von Phosphaten in der Reaktionskammer, das mit einem höheren Anteil von Eisenionen angereicherte Abwasser ermöglicht auch nach Verlassen des Fällmoduls eine effektivere Fällung des Abwassers im Klärbehälter. Dabei kann das Fällmodul in einfacher Weise in bestehende Systeme integriert werden, ohne bauliche Veränderungen unter hohem Aufwand zu erfordern.

Gemäß einer weiteren bevorzugten Ausführungsform ist mindestens eine der weiteren Seitenwände im Wesentlichen senkrecht zu den Metallplatten angeordnet. Diese Anordnung ermöglicht eine Konstruktion mit einem U-förmigen Querschnitt, dessen Schenkel die Metallplatten bilden und bei welcher die weitere Seitenwand sich zwischen den Rändern der Metallplatten erstreckt und diese miteinander verbindet. Die weitere Seitenwand schließt die entsprechende Seite die Reaktionskammer ab und kann eine Prallwand bilden, auf welche ein Strom einströmenden Abwassers aufprallt und somit umgelenkt wird, um den Auslass zu erreichen.

Gemäß einer weiteren bevorzugten Ausführungsform sind die weiteren Seitenwände im Wesentlichen senkrecht zueinander angeordnet. So ist ein Fällmodul möglich, bei dem die Reaktionskammer quaderförmig ist. Die zueinander senkrecht stehenden Seitenwände können die Metallplatten entlang zweier benachbarter Seitenkanten derselben verbinden.

Gemäß einer weiteren bevorzugten Ausführungsform bildet mindestens eine beliebige der weiteren Seitenwände den Boden oder Deckel der Reaktionskammer. Die Reaktionskammer ist somit nach oben und/oder nach unten abgeschlossen.

Gemäß einer weiteren bevorzugten Ausführungsform sind die Einlassseite und die Auslassseite die identische Seite der Reaktionskammer. Dies ist nach dem oben genannten Beispiel dann der Fall, wenn eine zweite offene Kastenseite nicht vorhanden ist, da diese durch eine weitere Seitenwand oder die Einbausituation des Fällmoduls verschlossen ist. Hierbei kann das Wasser nur aus der Seite aus der Reaktionskammer ausströmen, in die es auch eingeströmt ist. Somit ist eine Seitenidentität der Einlass- und der Auslassseite gegeben.

Gemäß einer weiteren bevorzugten Ausführungsform, steht eine erste der weiteren Seitenwände in der Montageposition im Wesentlichen senkrecht. Die Montageposition ist dabei die Endposition des Fällmoduls für die Anwendung der Abwasserklärung. Durch diese Ausführungsform kann im Zusammenhang mit den vorstehendend genannten Merkmalen eine Ausführungsform definiert werden, bei der die Einlassseite oder die Auslassseite sich in einer vertikalen Ebene befindet, also seitlich an der Reaktionskammer. Dies ermöglicht die Anordnung der weiter oben beschriebenen Art, bei der das Fällmodul seitlich vor eine Durchtrittsöffnung einer senkrechten Trennwand einer Klärkammer aufgehängt wird.

Gemäß einer weiteren bevorzugten Ausführungsform ist in der Montageposition mindestens eine zweite der weiteren Seitenwände im Wesentlichen horizontal angeordnet und bildet einen Deckel oder Boden der Reaktionskammer. In Verbindung mit der zuvor genannten Ausführungsform einer ersten, senkrechten Seitenwand, definiert diese Ausführungsform ein Fällmodul, bei dem eine der horizontalen Seiten der Reaktionskammer durch eine zweite der weiteren Seitenwände verschlossen ist. Wählt man insbesondere die Bodenseite als geschlossene Seite, so dass die Reaktionskammer oben offen bleibt, kann sich das einströmende Abwasser bei einer chargenweisen Beschickung zeitweilig beruhigen und im Fällmodul verbleiben, so dass diese Beruhigungsphase zur Ausfällung genutzt wird. Das ausgefällte Koagulat kann dann auf den geschlossenen Boden der Reaktionskammer absinken und sich dort sammeln.

Gemäß einer weiteren bevorzugten Ausführungsform umfasst das Fällmodul weitere Befestigungsmittel, um es an einer Wand oder Zwischenwand eines Klärbehälters zu befestigen. Um bestehende Kläranlagen, insbesondere Kleinkläranlagen mit Fällmodulen nachzurüsten, ist eine einfache Befestigungsmöglichkeit des Moduls von großem Vorteil. So könnten die Befestigungsmittel beispielsweise als Haken oder Bügel ausgebildet sein, die durch Verlängerungsstreben, Ketten oder dergleichen mit der Reaktionskammer verbunden sind.

Gemäß einer weiteren bevorzugten Ausführungsform sind an oder in der Reaktionskammer Führungsmittel zur Umlenkung und/oder Verwirbelung einer Strömung angeordnet. Hierdurch kann die Verweilzeit des Abwassers in der Reaktionskammer und damit die Effizienz des Fällmoduls weiter erhöht werden. Bei den Führungsmitteln kann es sich beispielsweise um Umlenkbleche oder dergleichen handeln, die die Strömung innerhalb der Reaktionskammer mehrfach umlenken und damit den in der Reaktionskammer zurückgelegten Weg des Fluids verlängern.

Weiter vorzugsweise sind die Führungsmittel ausgeführt, um die Strömung an der Einlassseite in Richtung einer der weiteren Seitenwände umzulenken. Hierdurch ist es möglich, eine Abwasserströmung in die Reaktionskammer zu leiten, die parallel zur Einlassseite strömt und damit zum größten Teil an dieser vorbeiströmen würde, ohne das Fällmodul zu durchströmen. Eine Umleitung durch Führungsmittel in das Fällmodul hinein erhöht die Effizienz in einer solchen Einbausituation und damit die Einsatzmöglichkeiten des Fällmoduls in Klärbehältern verschiedenster Bauart. Dabei können die Führungsmittel beispielsweise als Winkelbleche oder gewinkelte Rohre ausgeführt sein. Weiterhin können die Führungsmittel beispielsweise ausgeführt sein, um die Strömung an der Einlassseite in Richtung einer der Einlassseite gegenüberliegenden weiteren Seitenwand umzulenken. Hiermit wird eine Strömung ermöglicht, die mindestens einen Großteil einer Erstreckungsrichtung des Fällmoduls durchströmt. Die der Einlassseite gegenüberliegende weitere Seitenwand kann hierbei der Deckel oder Boden des Fällmoduls sein.

Gemäß einer bevorzugten Ausführungsform umfasst die Erfindung eine Klärvorrichtung mit mindestens einem Klärbehälter, der durch zumindest eine Trennwand in Klärkammern unterteilt ist, wobei die Trennwand zumindest eine Durchtrittsöffnung umfasst, und ein Fällmodul, dass an der Trennwand anliegend angeordnet ist und seine Einlassseite oder Auslassseite sich an die Durchtrittsöffnung anschließt. Hierbei ist das Fällmodul erfindungsgemäß, z.B. entsprechend einer der zuvor genannten Ausführungsformen ausgeführt.

Im Folgenden werden bevorzugte Ausführungsbeispiele der vorliegenden Erfindung anhand der Zeichnungen näher erläutert.
- Fig.1 und 2: zeigen eine erste Ausführungsform des Fällmoduls gemäß der vorliegenden Erfindung;
- Fig.3 bis 7: zeigen vertikale Schnitte durch Klärvorrichtungen, die das erfindungsgemäße Fällmodul gemäß der ersten Ausführungsform in verschiedenen Einbausituationen umfassen;
- Fig.8: zeigt eine dreidimensionale Abbildung der Einbausituation des erfindungsgemäßen des Fällmoduls nach Fig. 4.

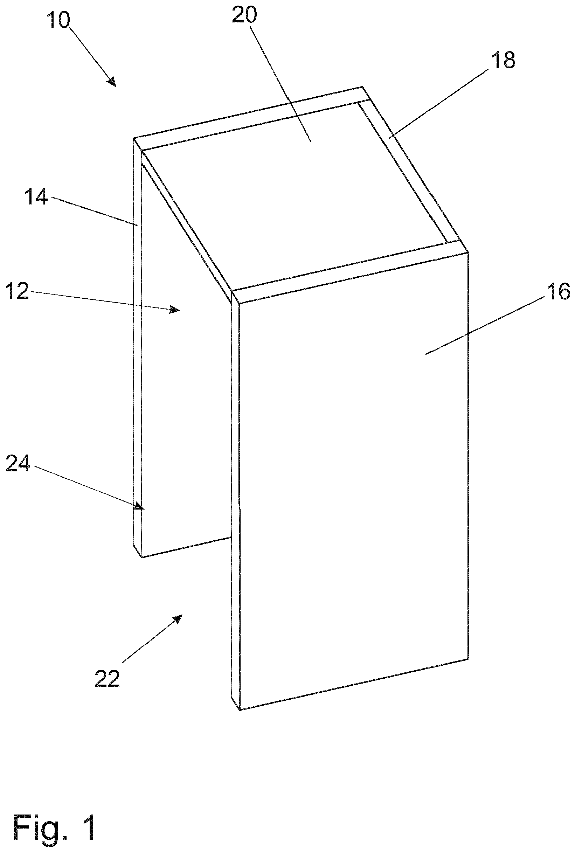

Das in Fig. 1 dargestellte Fällmodul 10 umfasst in bekannter Weise eine erste Metallplatte 14 und eine zweite Metallplatte 16, die rechteckig und gleich groß sind und parallel zueinander stehen. Der Raum zwischen diesen Metallplatten 14 und 16 stellt eine Reaktionskammer 12 des Fällmoduls 10 dar, in welchem die Ausfällreaktion zur Abwasserreinigung stattfindet. Die Metallplatten 14 und 16 bilden somit zwei gegenüberliegende Seitenwände dieser Reaktionskammer 12.

Weiterhin umfasst das Fällmodul 10 zwei weitere Seitenwände 18 und 20, die im Folgenden zur besseren Unterscheidbarkeit als erste weitere Seitenwand 18 und zweite weitere Seitenwand 20 bezeichnet werden sollen. Die erste weitere Seitenwand 18 steht in der Ausrichtung in Fig. 1, die einer Einbauposition des Fällmoduls 10 entspricht, senkrecht und verbindet die Metallplatten 14 und 16 an senkrechten Längskanten derselben, so dass sie die Reaktionskammer 12 seitlich abschließt.

Angrenzend an die erste weitere Seitenwand 18, genauer gesagt, an deren horizontale obere Längskante sowie an die parallelen oberen Längskanten der Metallplatten 14 und 16 ist die zweite weitere Seitenwand 20 angeordnet. Diese liegt in der Ausrichtung in Fig. 1 horizontal und schließt die Reaktionskammer 12 zu einer weiteren Seite ab.

Die weiteren Seitenwände 18 und 20 stehen hier somit senkrecht zueinander, ebenso stehen sie jeweils senkrecht zu den Metallplatten 14 und 16. Durch die Anordnung der Metallplatten 14 und 16 und der weiteren Seitenwände 18 und 20 ist die Reaktionskammer 12 zu vier Seiten hin abgeschlossen, bleibt jedoch zu den übrigen zwei Seiten 22 und 24 offen, welche in der Anordnung in Fig. 1 die Unterseite und die linke Seite darstellen. Diese Seiten 22, 24 sind senkrecht zueinander, also aneinander angrenzend angeordnet und bilden die Einlassseite und die Auslassseite, wobei die Zuordnung je nach Einbausituation und Anordnung des Fällmoduls 10 unterschiedlich ist. Wesentlich für den erfindungsgemäßen Aufbau des Fällmoduls 10 und dessen Funktion ist der Umstand, dass die verbleibenden offenen Seiten 22, 24 einander nicht gegenüber liegen.

Ein Abwasserstrom tritt an der Einlassseite (also einer der offenen Seiten 22 oder 24) in die Reaktionskammer 12 ein und trifft dann auf eine der weiteren Seitenwände 18 oder 20, welche der Einlassseite gegenüber liegen. Dadurch kann der Abwasserstrom die Reaktionskammer 12 nicht einfach ohne Richtungsänderung durchströmen, z.B. in einer annähernd laminaren schnellen Strömung, sondern er wird verwirbelt und zusätzlich in Richtung der Auslassseite (also der anderen der offenen Seiten 22 oder 24) umgelenkt.

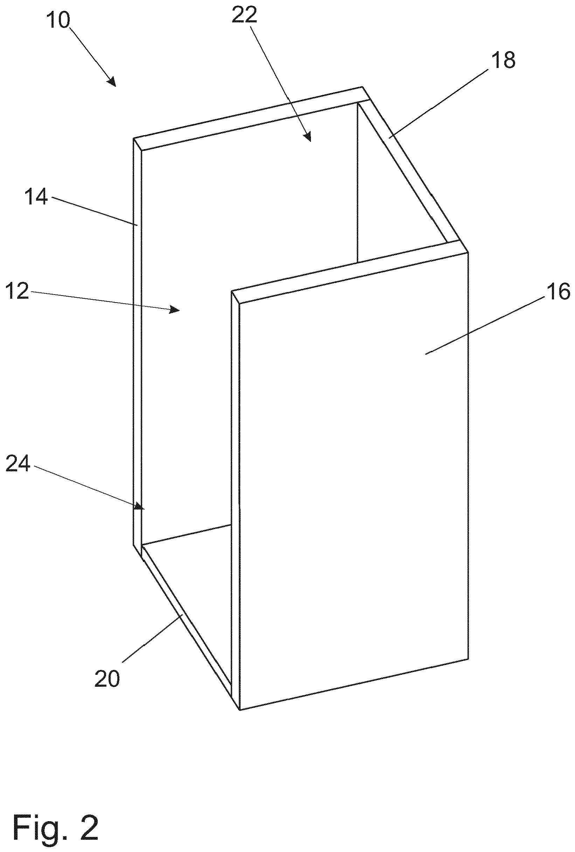

Fig. 2 zeigt im Wesentlichen das Fällmodul 10 aus Fig. 1 umgedrehter Ausrichtung, wobei die zweite der weiteren Seitenwände 20 im Gegensatz zur Fig. 1 den Boden der Reaktionskammer 12 darstellt. Die senkrechte Ausrichtung der Metallplatten 14 und 16 sowie der ersten weiteren Seitenwand 18 bleibt gleich.

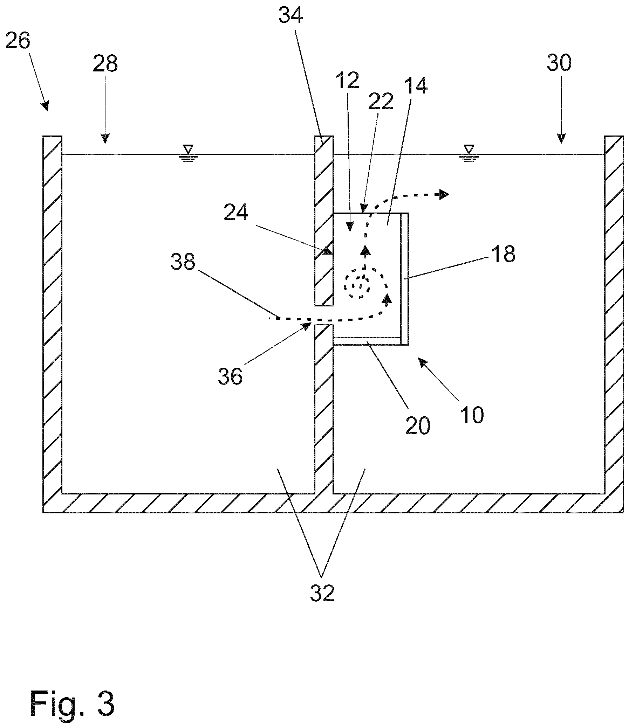

Fig. 3 zeigt einen vertikalen Schnitt durch eine Klärvorrichtung 26 mit einem in dieser Vorrichtung angeordnetem Fällmodul 10. Die Klärvorrichtung 26 umfasst eine erste Klärkammer 28 und eine zweite Klärkammer 30, die nebeneinander angeordnet sind und ein Abwasservolumen 32 enthalten. Hierbei kann die Klärkammer 28 eine vorgeschaltete Klärkammer sein und die Klärkammer 30 eine nachgeschaltete Klärkammer. Die Klärkammern 28 und 30 sind durch eine Trennwand 34 voneinander getrennt, welche durch eine Durchtrittsöffnung 36 durchbrochen ist, welche die Klärkammern 28 und 30 miteinander verbindet und einen Abwasseraustausch zwischen diesen ermöglicht. Insbesondere kann die nachgeschaltete zweite Klärkammer 30 eine biologische Klärkammer sein, die durch die vorgeschaltete Klärkammer 30 beschickt wird. Die Klärkammern 28 und 30 umfassen ferner übliche Einrichtungen, wie Belüfter, Heber oder dergleichen, die zur Durchführung des biologischen Klärvorgangs dienen und hier der Übersichtlichkeit halber nicht dargestellt sind.

Anliegend an der Trennwand 34 ist das Fällmodul 10 angeordnet, welches dem Fällmodul aus Fig. 1 und 2 in der Ausrichtung gemäß Fig. 2 entspricht und mit seiner offenen Seite 24, hier seiner Einlassseite, an der Trennwand 34 anliegend angeordnet ist. Die zweite weitere Seitenwand 20 ist unterhalb der Durchtrittsöffnung 36 angeordnet und schließt als Boden die Reaktionskammer 12 des Fällmoduls 10 ab. Die erste weitere Seitenwand 18 ist gegenüberliegend der Durchtrittsöffnung 36 angeordnet und schließt die Reaktionskammer 12 in Richtung der zweiten Klärkammer 30 ab. Die Metallplatte 14 und die nicht dargestellte, der Metallplatte 14 gegenüberliegende Metallplatte 16 bilden zwei weitere Seitenwände der Reaktionskammer und schließen diese gegenüber der zweiten Klärkammer 30 in lateraler Richtung ab.

Bei einem Strom 38 des Abwasservolumens 32 von der ersten Klärkammer 28 in die zweite Klärkammer 30 strömt das Abwasser durch die Öffnung 36 und tritt dadurch durch die Einlassseite 24 in die Reaktionskammer 12 des Fällmoduls 10 ein. Der Abwasserstrom 38 trifft auf die quer zum Strom angeordnete erste weitere Seitenwand 18 und wird dadurch verwirbelt. Dadurch wird der Abwasserstrom 38 im Wesentlichen umgelenkt und verlässt die Reaktionskammer durch die offene Seite 22, die hier die Auslassseite ist.

Dabei wird die Aufenthaltszeit des Abwassers im Fällmodul 110 stark verlängert und zusätzlich muss das gesamte durch die Durchtrittsöffnung 36 strömende Abwasser 38 die Reaktionskammer 12 passieren. Dies erhöht die Effektivität der Phosphatfällung in hohem Maße. Insbesondere ist dies dann der Fall, wenn keine zeitlich kontinuierliche Strömung, sondern nur ein begrenztes Abwasservolumen in die Reaktionskammer 12 einströmt und erst nach einer Ruhephase durch nachströmendes Abwasser aus der Reaktionskammer 12 verdrängt wird. Darüber hinaus wird eine vorhandene Strömung ausgenutzt, was zusätzliche strömungserzeugende Mittel überflüssig macht. Dies erleichtert die Nachrüstbarkeit von bestehenden Klärvorrichtungen und verbessert die Nachhaltigkeit des Fällmoduls. Befestigungsmittel können zum Beispiel Haken sein, die mit ihrem Hakenende an der Oberkante der Trennwand 34 eingehakt werden und an deren geraden Ende das Fällmodul 10 befestigt ist. Diese und andere lösbare Befestigungsmittel erleichtern die Nachrüstbarkeit und einen Ausbau des Fällmoduls, z.B. für die Auswechslung der Metallplatten.

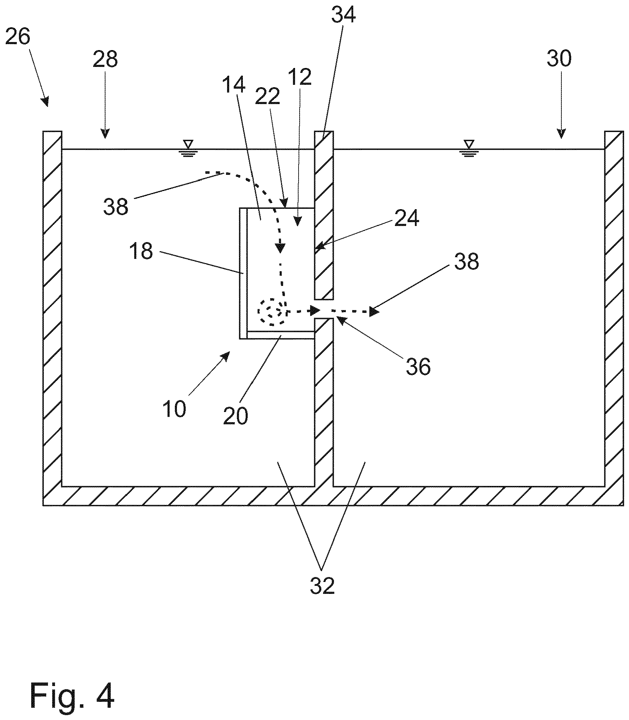

Der Abwasserstrom 38 durch die Durchtrittsöffnung 36 kann allein dadurch erzeugt werden, dass zum Ausgleich unterschiedlicher Füllstände zwischen der ersten Klärkammer 28 und der zweiten Klärkammer 30 Abwasser durch die Durchtrittsöffnung 36 strömt. Auf zusätzliche Mittel oder Einrichtungen, die eigens zur Erzeugung des Abwasserstrom 38 dienen und dem erfindungsgemäßen Fällmodul 10 zugeordnet sind, kann dann verzichtet werden. Dies ist hier und auch bei den nachfolgend in den Fig. 4 bis 8 dargestellten Ausführungsformen der Fall.

Fig. 4 zeigt eine Ausführungsform, die im Wesentlichen der Ausführungsform aus Fig. 3 entspricht. Dem gegenüberstehend ist das Fällmodul 10 in der ersten Klärkammer 28 angeordnet, genauer an der dieser ersten Klärkammer 28 zugewandten Innenwandseite der Trennwand 34. Das Fällmodul 10 ist bezüglich der Trennwand spiegelbildlich zur Anordnung aus Fig. 3 angeordnet. Auch hier liegt es mit der offenen Seite 24 an der Trennwand an. Diese ist hier die Auslassseite der Reaktionskammer 12, wobei die oben liegende offene Seite 22 die Einlassseite ist. Hier strömt der Abwasserstrom 38 von oben in die Reaktionskammer 12 ein, trifft auf deren Boden, der durch die zweite weitere Seitenwand 20 gebildet wird, und wird dadurch verwirbelt. Die erste weitere Seitenwand 18 und die Metallplatten verhindern, dass der Abwasserstrom 38 die Reaktionskammer 12 in die lateralen Richtungen verlässt und nur an der Auslassseite 24 durch die Durchtrittsöffnung 36 seitlich aus der Reaktionskammer 12 ausströmen kann.

In der in Fig. 4 gezeigten Ausführungsform ist das Fällmodul 10 in der ersten Klärkammer 28 und somit in der Vorklärung angeordnet. Das Ausfällen erfolgt somit außerhalb der biologischen Klärung, die in der zweiten Klärkammer 30 stattfindet. Das Koagulat kann sich auf dem Boden der Reaktionskammer 12 sammeln und von dort, also aus einem Bereich außerhalb der zweiten (biologischen) Klärkammer 30 getrennt entsorgt werden.

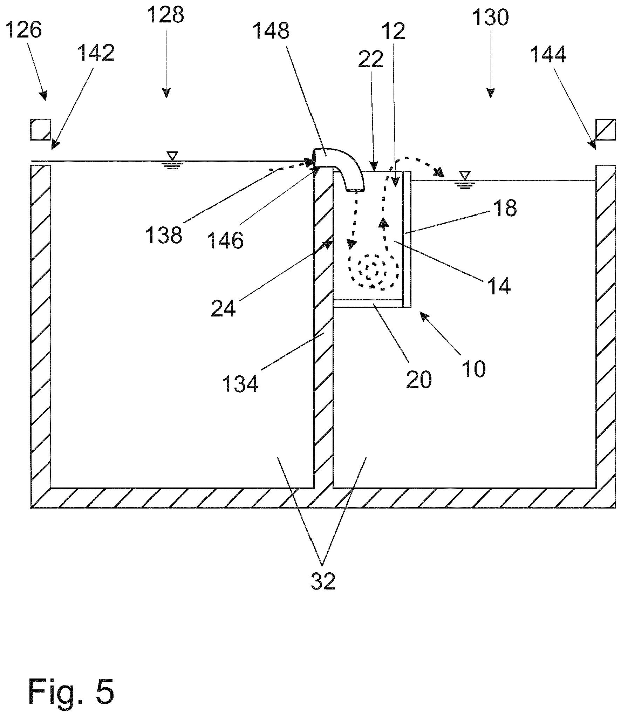

Eine weitere Ausführungsform ist in Fig. 5 dargestellt. Hierbei weist die Klärvorrichtung 126 einen Einlass 142 auf, durch welchen Abwasser einer ersten Klärkammer 128 zugeführt wird. Weiterhin umfasst die Klärvorrichtung 126 einen Auslass 144, der Abwasser aus einer zweiten Klärkammer 130 abführt.

Das Fällmodul 10 entspricht dem Fällmodul aus Fig. 1. Es ist anliegend an einer Trennwand 134 angeordnet, deren Anordnung zwischen zwei Klärkammern 128 und 130 der Trennwand 34 aus Fig. 4 entspricht, welche jedoch einen Überlauf 146 umfasst, über den ein Abwasserstrom 138 von der ersten Klärkammer 128 in die zweite Klärkammer 130 strömt. Der Überlauf 146 umfasst dabei ein gebogenes Rohr 148, welches vom Überlauf 146 in einem rechten Winkel frei in die zweite Klärkammer 130 ragt und in dieser endet. Dabei weist die erste Öffnung des Rohres 148 horizontal zur ersten Klärkammer 128 und die zweite Öffnung erstreckt sich durch die offene Seite 22 des oben offenen Fällmoduls 10 nach unten in die Reaktionskammer 12 hinein. Das Rohr 148 leitet den Abwasserstrom 138 gerichtet in die Reaktionskammer 12, wo dieser auf den Boden 20 trifft und verwirbelt wird. Die Metallplatten 14 und 16 sowie die erste weitere Seitenwand 18 verhindern ein Ausströmen in lateraler Richtung. Da die Seite 24 bündig und dicht mit der Trennwand 134 abschließt, kann der Abwasserstrom 138 nur aus der offenen Seite 22 neben der zweiten Öffnung des Rohrs 148 aus- und überströmen. Daher entspricht die Auslassseite hier der Einlassseite, d.h. Einlassseite und Auslassseite sind identisch.

Die vorliegende Ausführungsform, ermöglicht insbesondere bei zyklischem Betrieb der Klärvorrichtung eine lange Aufenthaltszeit des Abwassers in der Reaktionskammer 12 des Fällmoduls 10, da das im vorherigen Zyklus schwallweise zugeführte Abwasser so lange in der Reaktionskammer verweilt, bis der Abwasserstrom 138 im nächsten Zyklus einen Schwall neuen Abwassers zuführt, sodass die Reaktionskammer überläuft.

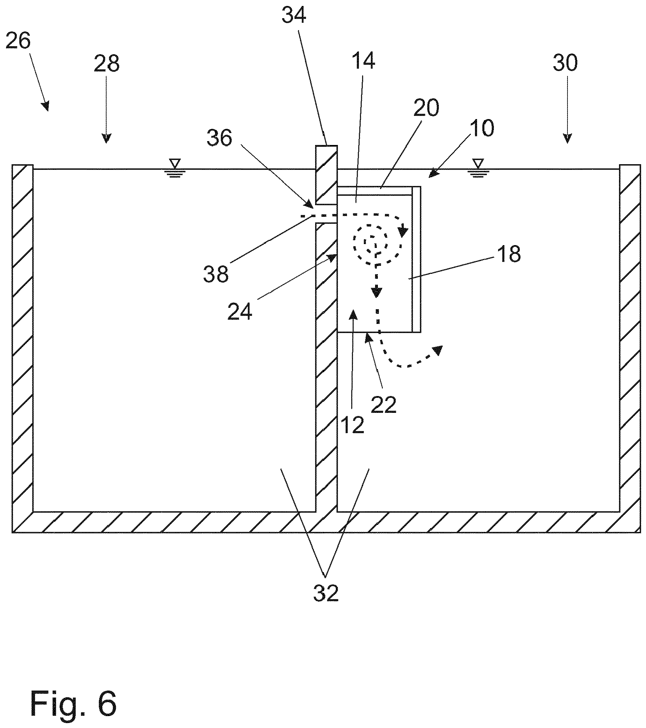

In der in Fig. 6 dargestellten Einbauweise ist das Fällmodul 10 aus Fig. 1 in horizontal gespiegelter Position zur Fig. 3 angeordnet. Die zweite weitere Seitenwand 20 bildet somit den Deckel des Fällmoduls 10 und schließt dieses nach oben hin ab. Ein durch die Öffnung 36 strömender Abwasserstrom 38 kann in der dargestellten Einbauweise durch die die Reaktionskammer 12 begrenzenden Metallplatten 14 und 16 und die erste weitere Seitenwand 18 nur vertikal nach unten aus dem Fällmodul 10 ausströmen. Dadurch wird hier sämtliches die Durchtrittsöffnung 36 passierendes Abwasser zwangsweise durch die Reaktionskammer 12 geleitet.

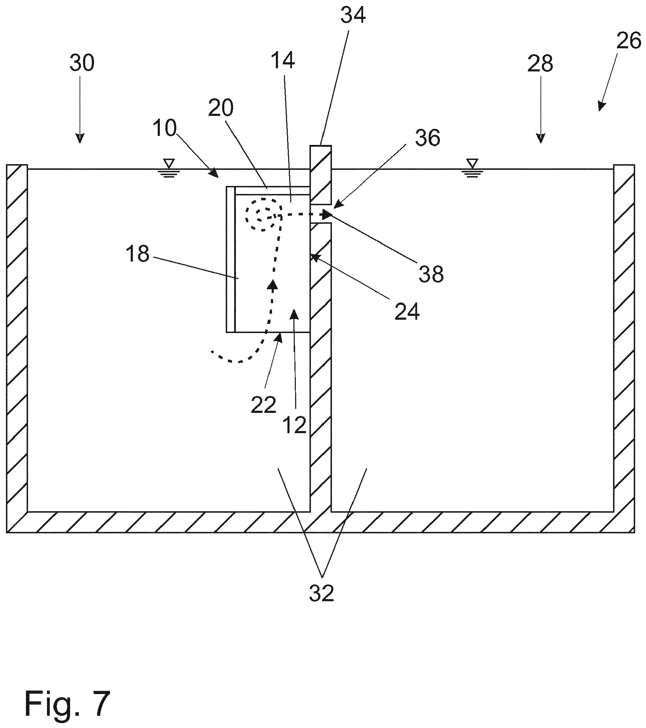

Eine vergleichbare Einbauweise zeigt Fig. 7, bei der das Fällmodul 10 gespiegelt an der Trennwand 34 in der Klärkammer 28 angeordnet ist. Die Reaktionskammer 12 wird hierbei durch die zweite weitere Seitenwand 20 als Deckel nach oben hin begrenzt und lateral ebenfalls durch die Metallplatten und die erste weitere Seitenwand 18 abgeschlossen. Der Abwasserstrom 38 muss somit die Reaktionskammer 12 passieren, um durch die Durchtrittsöffnung 36 in die zweite Klärkammer 30 zu strömen.

Bei dieser Ausführungsform ist es möglich, das Fällmodul 10 in einem Volumenstrom in der Klärkammer 28 anzuordnen, der z.B. durch einen Belüfter (nicht dargestellt) erzeugt wird, der am Boden der Klärkammer 28 angeordnet ist. Dieser Volumenstrom dringt von unten in das Fällmodul 10 ein und erzeugt den Abwasserstrom 38 durch das Fällmodul 10.

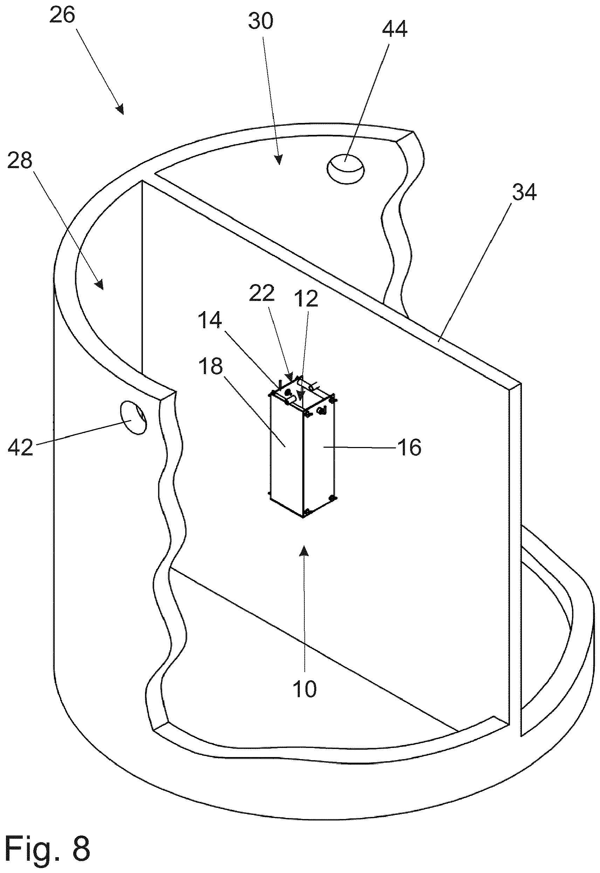

Eine dreidimensionale Ansicht der Einbausituation aus Fig. 4 ist in Fig. 8 dargestellt. Die Anordnung des Fällmoduls 10 entspricht dabei im Wesentlichen der Anordnung aus Fig. 4. Die Klärvorrichtung 26 zeigt die zwei Klärkammern 28 und 30, sowie die Trennwand 34. Hierbei weist die Klärkammer 28 einen Einlass 42 auf, der als Zulauf für zu reinigendes Abwasser dient, und die Klärkammer 30 umfasst einen Auslass 44, der als Klarwasserabzug dient. Das Fällmodul 10 ist anliegend an der Trennwand 34 angeordnet, wobei die Metallplatten 14 und 16 dieses ebenso wie die erste weitere Seitenwand 18 lateral begrenzen und die Reaktionskammer 12 definieren. Wegen der hier nicht dargestellten zweiten weiteren Seitenwand 20, die den Boden der Reaktionskammer 12 abschließt, kann ein Abwasserstrom nur durch die oben gelegene erste offene Seite 22 in das Fällmodul einströmen und durch die seitliche zweite offene Seite 24 des Fällmoduls 10 und die hier nicht dargestellte Durchtrittsöffnung 36 der Trennwand 34 in die zweite Klärkammer 30 strömen.

Abweichend von den hier dargestellten Ausführungsformen kann das Fällmodul 10 aus den Fig. 1 und 2 auch in einer um 90° gedrehten Position verwendet werden, in welcher die Metallplatten 14, 16 horizontal stehen und beide weiteren Seitenwände 18, 20 senkrecht. Einlassseite und Auslassseite befinden sich dann auf der gleichen Höhe.

## Patentansprüche

1. Fällmodul (10) zur Reinigung von Abwasser durch Abgabe von Metallionen mittels Oxidation oder Elektrolyse, umfassend zwei Metallplatten (14, 16), die im Abstand voneinander angeordnet sind, **dadurch gekennzeichnet, dass** die Metallplatten (14, 16) durch mindestens zwei weitere Seitenwände (18, 20) zu einer Reaktionskammer (12) ergänzt werden, die zu einer Einlassseite und einer der Einlassseite nicht gegenüberliegenden Auslassseite (22, 24) offen ist.

2. Fällmodul (10) nach Anspruch 1, **dadurch gekennzeichnet, dass** mindestens eine der weiteren Seitenwände (18, 20) im Wesentlichen senkrecht zu den Metallplatten (14, 16) angeordnet ist.

3. Fällmodul (10) nach einem der Ansprüche 1 oder 2, **dadurch gekennzeichnet, dass** die weiteren Seitenwände (18, 20) im Wesentlichen senkrecht zueinander angeordnet sind.

4. Fällmodul (10) nach einem der Ansprüche 1 bis 3, **dadurch gekennzeichnet, dass** die Einlassseite und die Auslassseite die identische Seite der Reaktionskammer (12) sind.

5. Fällmodul (10) nach einem der vorstehenden Ansprüche, **dadurch gekennzeichnet, dass** eine erste der weiteren Seitenwände (18, 20) in der Montageposition im Wesentlichen senkrecht steht.

6. Fällmodul (10) nach Anspruch 5, **dadurch gekennzeichnet, dass** mindestens eine zweite der weiteren Seitenwände (18, 20) im Wesentlichen horizontal angeordnet ist und einen Deckel oder Boden der Reaktionskammer (12) bildet.

7. Fällmodul (10) nach einem der vorstehenden Ansprüche, weiter umfassend Befestigungsmittel, um das Fällmodul (10) an einer Wand oder Zwischenwand (34, 134) eines Klärbehälters oder einer Klärkammer (28, 30, 128, 138) zu befestigen.

8. Fällmodul (10) nach einem der vorstehenden Ansprüche, **dadurch gekennzeichnet, dass** an oder in der Reaktionskammer (12) Führungsmittel zur Umlenkung und/oder Verwirbelung einer Strömung (38, 138) angeordnet sind.

9. Fällmodul (10) nach Anspruch 8, **dadurch gekennzeichnet, dass** die Führungsmittel ausgeführt sind, um die Strömung (38, 138) an der Einlassseite in Richtung einer der weiteren Seitenwände umzulenken.

10. Klärvorrichtung (26), umfassend zumindest einen Klärbehälter, der durch zumindest eine Trennwand (34, 134) in Klärkammern (28, 30, 128, 138) unterteilt ist, wobei die Trennwand (34, 134) zumindest eine Durchtrittsöffnung (36) oder einen Überlauf (146) umfasst, und ein Fällmodul (10) nach einem der Ansprüche 1 bis 9, **dadurch gekennzeichnet, dass** das Fällmodul (10) an der Trennwand (34, 134) anliegend angeordnet ist und seine Einlassseite oder Auslassseite sich an die Durchtrittsöffnung (36) oder den Überlauf (146) anschließt.

11. Klärvorrichtung (26) nach Anspruch 10, **dadurch gekennzeichnet, dass** der Überlauf (146) einen Stutzen (148) umfasst, der in die Reaktionskammer (12) hineinragt.
